Europäisches Patentamt

(19) European Patent Office

Office européen des brevets

(11) EP 0 782 013 A2

(12) EUROPEAN PATENT APPLICATION

(43) Date of publication:
02.07.1997 Bulletin 1997/27

(51) Int. Cl.⁶: G01V 15/00

(21) Application number: 96120897.2

(22) Date of filing: 27.12.1996

(84) Designated Contracting States:
DE ES FR GB IT PT

(30) Priority: 27.12.1995 JP 340290/95

(71) Applicant: UNITIKA LTD.
Amagasaki-shi Hyogo (JP)

(72) Inventors:
• Ueno, Shuji
Momoyama-cho, Fushimi-ku (JP)
• Hirano, Toshiyuki
Uji-shi, Kyoto (JP)
• Amiya, Kenji
Uji-shi, Kyoto (JP)

(74) Representative: Hansen, Bernd, Dr. Dipl.-Chem.
et al
Hoffmann, Eitle & Partner,
Patentanwälte,
Arabellastrasse 4
81925 München (DE)

(54) Magnetic marker

(57) A magnetic marker capable of showing a large Barkhausen reversal, comprising a pulse-generating magnetic ribbon, and magnetic substances disposed at opposite ends of said magnetic ribbon having a coercive force smaller than the coercive force of said magnetic ribbon. The pulse-generating magnetic ribbon has an equivalent wire diameter in a range of from 60 $\mu$m to 115 $\mu$m and a BH loop rectangular ratio $B_r/B_s$ that is not less than 0.8. The magnetic marker is capable of generating a large Barkhausen reversal even if the length of the magnetic ribbon is short, and the magnetic marker can be made small in size without deteriorating its excellent large Barkhausen signal characteristics, namely, a pulse voltage value and high harmonic components.

EP 0 782 013 A2

**Description**

BACKGROUND OF THE INVENTION

1. Field of the Invention

The present invention relates to a magnetic marker which is attached to a article to thereby detect the presence or absence of the article.

2. Description of the Related Art

The use of markers which are attached to individual is known in the art for detecting the number of marked articles, determining the kinds of marked articles, or preventing the theft of the marked articles. Heretofore, such were not intended to be directly visible, but rather were attached to articles so as to be detectable by magnetic or microwaves means.

Examples of such markers include (i) markers of the type in which an alternating magnetic field is applied to an amorphous ribbon or a thin wire so that the turbulence produced in the test region of a magnetic field and the high-order harmonic component of the resulting output pulses can be detected; (ii) markers of the type in which an electric wave is radiated from outside onto a coil and a capacitor formed of aluminum so that the phenomenon of LC resonance in each marker is detected etc. Of these, a method employing an amorphous magnetic substance having a large Barkhausen effect that is attached to a article provides a light weight system of high sensitivity and low misdetection. More particularly, this type of marker generates sharp pulses which are detected at the time of magnetic reversal of a magnetic thin wire in the presence of alternating magnetic field.

Large Barkhausen reversal is a phenomenon of magnetic wall migration which occurs when the critical magnetic field H* required for forming a inverse magnetic domain is greater than the minimum magnetic field $H_0$ required for magnetic wall migration. This results in rapid magnetic reversal such that a inverse magnetic domain is formed and moved instantaneously when the effective magnetic field $H_{eff}$, obtained by subtracting the demagnetizing field $H_d$ generated in the magnetic substance from the external magnetic field $H_{ex}$ applied to the magnetic substance is greater than the critical magnetic field H* required for forming the inverse magnetic domain. The output voltage generated by such magnetic reversal is constant regardless of the intensity of the externally applied magnetic field or the frequency of the alternating magnetic field. Furthermore, the output voltage has a sharp pulse waveform which is rich in high-order harmonic components.

Of these magnetic markers, the magnetic marker proposed by Japanese Patent Unexamined Publication No. Hei-4-195384 has a configuration in which soft magnetic substances having a small coercive force are disposed at opposite end portions of a pulse-generating magnetic thin wire. The marker comprises a magnetic thin wire having a large Barkhausen effect, and soft magnetic substances attached to opposite end portions of the magnetic thin wire having a coercive force which is smaller than that of the magnetic thin wire. The demagnetizing field on the pulse-generating magnetic thin wire is reduced due to the soft magnetic substances attached to the magnetic thin wire. Accordingly, the size of the magnetic marker can be reduced.

However, because the diameter of the pulse-generating magnetic thin wire in the magnetic marker is 120 $\mu$m, the large Barkhausen effect is such that a practical output voltage cannot be obtained for a magnetic wire not longer than 50 mm. Accordingly, there is a need in the art for a magnetic marker having a shorter length.

SUMMARY OF THE INVENTION

Therefore, it is an object of the present invention to provide a small-size magnetic marker which exhibits a large Barkhausen reversal phenomenon and has a very short element length.

The above object is achieved in a first embodiment of the present invention by providing a magnetic marker capable of showing a large Barkhausen reversal, which comprises a pulse-generating magnetic ribbon, and magnetic substances disposed at opposite ends of the magnetic ribbon having a coercive force smaller than the coercive force of the magnetic ribbon, wherein the pulse-generating magnetic ribbon has an equivalent wire diameter in a range of from 60 $\mu$m to 115 $\mu$m and a BH loop rectangular ratio $B_r/B_s$ that is not less than 0.8.

In a second embodiment, the present invention provides a magnetic marker capable of showing large Barkhausen reversal, which comprises a pulse-generating magnetic ribbon, and magnetic substances disposed at opposite ends of the magnetic ribbon having a coercive force smaller than the coercive force of the magnetic ribbon, wherein the pulse-generating magnetic ribbon has an equivalent wire diameter D in a range of from 60 $\mu$m to 140 $\mu$m and a BH loop rectangular ratio $B_r/B_s$ which satisfies the following expression (1):

$$-0.003D + 1.01 \leq B_r/B_s \leq -0.00125D + 1.0875 \qquad (1)$$

with respect to the equivalent wire diameter D.

In a third embodiment, the present invention provides a magnetic marker capable of showing a large Barkhausen reversal, which comprises a pulse-generating magnetic ribbon and magnetic substances disposed at opposite ends of the magnetic ribbon and each having a coercive force smaller than the coercive force of the magnetic ribbon, wherein the pulse-generating magnetic ribbon has an equivalent wire diameter D in a range of from 70 $\mu$m to 140 $\mu$m and a BH loop rectangular ratio $B_r/B_s$ which satisfies the following expression (2):

$$-0.003D + 1.01 \leq B_r/B_s \leq 0.8 \qquad\qquad (2)$$

with respect to the equivalent wire diameter D.

Thus, the present invention provides a magnetic marker which produces a large Barkhausen effect even when the length of the magnetic ribbon is short. Also, it is possible to make a small magnetic marker while still providing large Barkhausen signal characteristics, namely, a high pulse voltage and a rich high-order harmonic component.

BRIEF DESCRIPTION OF THE DRAWINGS

In the accompanying drawings:

Fig. 1 is a typical view showing an example of a magnetic marker according to the present invention;

Fig. 2 is a graph showing the 30th-order high harmonic gain as a function of the length of a pulse-generating magnetic ribbon, including a comparison between a magnetic marker according to an embodiment of the present invention and a magnetic marker according to a comparative example;

Fig. 3 is a graph showing output voltage as a function of the length of a pulse-generating magnetic ribbon, including a comparison between a magnetic marker according to an embodiment of the present invention and a magnetic marker according to a comparative example;

Fig. 4(a) shows the lengthwise and widthwise positioning of an end portion of a magnetic ribbon relative to the sides of a magnetic substance as given in Fig. 4(b);

Fig. 4(b) is a graph showing 30th-order high harmonic gain as a function of the change in position of the opposite end portions of a pulse-generating magnetic ribbon in a magnetic sheet;

Fig. 5(a) shows the lengthwise and widthwise positioning of an end portion of a magnetic ribbon relative to the sides of a magnetic substance as given in Fig. 5(b);

Fig. 5(b) is a graph showing output voltage as a function of a change in positions of the opposite end portions of a pulse-generating magnetic ribbon in a magnetic sheet;

Fig. 6 is a typical schematic view of a magnetic marker according to Example 16 of the present invention; and

Fig. 7 is a typical schematic view of a magnetic marker according to Example 17 of the present invention.

Description of the Reference Numerals

1       magnetic ribbon
2, 3    magnetic sheet
4, 5    substrate

DETAILED DESCRIPTION OF THE INVENTION

The present invention will be described in detail below with reference to the drawings.

A characteristic feature of the present invention resides in that a magnetic marker capable of showing a large Barkhausen reversal formed by combining a pulse-generating magnetic ribbon and demagnetizing field-reducing magnetic substances.

In the present invention, magnetic substances having a coercive force smaller than that of a pulse-generating magnetic ribbon are disposed at opposite end portions of the magnetic ribbon so as to adhere closely to the magnetic ribbon. Because of the magnetic substances thus closely disposed, the demagnetizing field on the pulse-generating magnetic ribbon is reduced. As a result, a small-size magnetic marker having excellent large Barkhausen signal characteristics, namely, a high pulse voltage and a rich high-order harmonic component as a whole is obtained. This is the case even when using a magnetic ribbon of short length such that the demagnetizing field may be too large to observe the large Barkhausen reversal if the magnetic ribbon is used alone.

The pulse-generating magnetic ribbon for use in the present invention is formed from a magnetic material which exhibits a large Barkhausen effect when the magnetic material has a length that is not shorter than 10 cm. An amorphous metal ribbon of an Fe-Group metal is preferably used in which both the absolute value of saturation magnetostriction is not less than $2\times10^{-6}$ and the ratio of the thickness of the ribbon to the width thereof (thickness/width) is in a

EP 0 782 013 A2

range of from 0.015 to 0.4. Above all, it is preferable to use an amorphous metal ribbon having an absolute value of saturation magnetostriction is not less than $3\times10^{-6}$ and a ratio of the thickness of the ribbon to the width thereof (thickness/width) that is in a range of from 0.02 to 0.35, and which is formed from an alloy containing: at least one Fe-Group element in a range of from 65 atom % to 90 atom % in total selected from the group consisting of Fe, Co and Ni; at least one element in a range of from 10 atom % to 35 atom % in total selected from the group consisting of B, P, C, Si, Al, Ga, Zr, Nb and Ta; and at least one element in a range of 10 atom % or less in total selected from the group consisting of W, V, Cr, Cu and Mo.

Furthermore, the pulse-generating magnetic ribbon of the present invention requires that the equivalent wire diameter D given by the following expression (3) and which is calculated using the sectional area S of the ribbon (that is, the equivalent wire diameter when the sectional area is given as a circular area) with a specific range.

$$D = (4S/\pi)^{1/2} \tag{3}$$

In the first embodiment of the present invention, the pulse-generating magnetic ribbon has an equivalent wire diameter D is in a range of from 60 $\mu$m to 115 $\mu$m, preferably in a range of from 65 $\mu$m to 112 $\mu$m, and more preferably in a range of from 70 $\mu$m to 110 $\mu$m. Also, the pulse-generating magnetic ribbon has a BH loop rectangular ratio $B_r/B_s$ not less than 0.8. In the present invention, $B_s$ is the saturation flux density of the material and $B_r$ is the residual flux density of the material.

A high pulse voltage can be generated from the magnetic marker when the rectangular ratio of the magnetic ribbon is selected so that it is not less than 0.8.

Furthermore, the demagnetizing field of the magnetic ribbon can be reduced by providing the magnetic ribbon with an equivalent wire diameter D within a range of from 60 $\mu$m to 115 $\mu$m, so that the length of the magnetic ribbon can be shortened.

In the second embodiment of the present invention, the pulse-generating magnetic ribbon has an equivalent wire diameter D is in a range of from 60 $\mu$m to 140 $\mu$m, and preferably in a range of from 70 $\mu$m to 130 $\mu$m. Also, the pulse-generating magnetic ribbon has a BH loop rectangular ratio $B_r/B_s$ which the following expression (1).

$$-0.003D + 1.01 \leq B_r/B_s \leq -0.00125D + 1.0875 \tag{1}$$

In the third embodiment of the present invention, the pulse-generating magnetic ribbon has an equivalent wire diameter D ($\mu$m) in a range of from 70 $\mu$m to 140 $\mu$m, and preferably in a range of from 90 $\mu$m to 130 $\mu$m. Also, the pulse-generating magnetic ribbon has a BH loop rectangular ratio $B_r/B_s$ which satisfies the following expression (2).

$$-0.003D + 1.01 \leq B_r/B_s \leq 0.8 \tag{2}$$

As described above, the present invention (first, second and third embodiments) provides a magnetic marker which exhibits a large Barkhausen reversal even when the length of the magnetic ribbon is short, by using a magnetic ribbon having an equivalent wire diameter D within a specific range and an rectangular ratio $B_r/B_s$ within a specific range. Furthermore, the size of the magnetic marker can be reduced without deteriorating the excellent large Barkhausen signal characteristics, namely, a high pulse voltage and a rich high-order harmonic components.

To the contrary, when a magnetic marker is formed using a magnetic ribbon having an rectangular ratio $B_r/B_s$ or equivalent wire diameter D which is outside the scope of the present invention, a magnetic marker capable of showing a large Barkhausen reversal cannot be obtained. This is because the influence of the demagnetizing field becomes large if the equivalent wire diameter D of the magnetic ribbon or the rectangular ratio $B_r/B_s$ is too large. If the equivalent wire diameter D of the magnetic ribbon or the rectangular ratio $B_r/B_s$ is too small, a large Barkhausen reversal is obtained. However, the change of total flux based on the reversal is so small that the amplitude of the plus thus generated is also low. Consequently, an excellent large Barkhausen signal (namely, a high pulse voltage and a rich high-order harmonic component) cannot be obtained from the magnetic marker.

The length of the pulse-generating magnetic ribbon of the present invention is preferably in a range of from 5 to 100 mm, particularly preferably in a range of from 15 to 50 mm.

Furthermore, in the present invention, magnetic substances having a coercive force smaller than that of the magnetic ribbon are closely disposed at opposite end portions of the pulse-generating magnetic ribbon. Preferably, magnetic sheets having a coercive force smaller than that of the magnetic ribbon are used. As used herein, the coercive force of the magnetic ribbon is a measured value of a magnetic ribbon having a length that is not smaller than 100 times its equivalent wire diameter, and the coercive force of the magnetic substance is a measured value of a magnetic substance having a length that is not smaller than 100 times its thickness.

Examples of the magnetic sheets for use in the present invention include sheets made of a magnetic substances which do not exhibit a magnetic reversal due to a large Barkhausen effect when the thickness, and area thereof are in a range of from 0.01 to 100 $\mu$m and from 1 to 10000 mm$^2$, respectively. Particularly, magnetic substances formed from

4

an Fe-Group amorphous alloy are preferred. More preferably, there is an amorphous magnetic material which includes 70 atom% to 90 atom% of an Fe-group material which consists of one or more elements selected from the group consisting of Fe, Co and Ni and 10 atom% to 30 atom% of a material which consists of one or more elements selected from the group consisting of B, P, C, Si, Zr, Nb and Ta.

Furthermore, when the magnetic sheet has a length 100 times its thickness, a magnetic sheet having any one of various shapes such as a circle, an ellipse, a polygon, etc., can be used providing that the magnetic sheet has a coercive force smaller than that of the magnetic ribbon. Among these, rectangular magnetic sheets are most preferable because rectangular magnetic sheets are excellent reducing the demagnetizing field on the magnetic ribbon.

Furthermore, with respect to the positional relation between the magnetic ribbon and the magnetic sheets, the end portions of the magnetic ribbon are located in the center portions of the respective magnetic sheets, to thereby achieve the greatest reduction of the demagnetizing field generated on the pulse-generating magnetic belt.

Generally, in order to reduce the size of the magnetic marker, the length of the pulse-generating magnetic material. However, if the ratio of the length to the equivalent wire diameter (aspect ratio) is however reduced, the demagnetizing field on the magnetic ribbon increases so that an excellent large Barkhausen signal cannot be obtained. Furthermore, the output voltage from the magnetic marker depends on the change in total flux. Thus, the signal/noise ratio of the magnetic marker signal is reduced and the magnetic marker looses its excellent magnetic properties when not only the length but also the equivalent wire diameter are reduced to keep the aspect ratio constant. As described above, a magnetic ribbon having an equivalent wire diameter D and a BH loop rectangular ratio $B_r/B_s$ within the aforementioned ranges, respectively, is used as the pulse-generating magnetic ribbon in the present invention. These specific ranges were found to reduce the influence of the demagnetising field when a short pulse-generating magnetic ribbon is used, to thereby generate a large Barkhausen reversal on the one hand, and on the other hand to increase the total flux quantity based on the magnetic reversal to thereby obtain an excellent output voltage and high order harmonic characteristic.

The pulse-generating magnetic ribbon of the present invention can be produced by a liquid quenching method using a solid coolant such as a single roll method, or the like. Also, the magnetic ribbon can be subjected to heat treating after quenching.

With respect to liquid quenching during production of the magnetic ribbon, for example, in a typical single roll method, an alloy melt at a temperature that is 20°C-200°C higher than its melting point is jetted, through a nozzle, onto a quenching roll rotating at a circumferential speed of from 5 to 40 m/s to thereby produce the magnetic ribbon. Furthermore, with respect to the heat treating, the quenched/solidified magnetic ribbon is heat treated in a temperature range of from 200°C to 450°C for a time of from 0.1 to 1000 seconds so that a magnetic ribbon having a desired magnetic characteristic is obtained. In order to obtain the desired large Barkhausen reversal, an electrical current, a magnetic field or a stress such as torsion, tension, etc., may be applied during the heat treatment.

As a magnetic marker producing method according to present invention, various methods capable of obtaining a characteristic indicating the large Barknausen reversal can be used. For example, magnetic elements having a predetermined length are arranged on a base film on which an adhesion is applied at a predetermined interval. Thereafter, the magnetic ribbons for generating pulse having a desired length are arranged so that the opposite ends of the ribbon is positioned at the center of respective magnetic element which is arranged on the film. Then, it is interposed between the base film and another film on which adhesion is applied.

EXAMPLES

The present invention will be described below in reference to the following Examples and Comparative Examples. However, the present invention should not be construed as being limited thereto.

Examples 1 to 15 and Comparative Examples 1 to 6

First, Examples 1 to 15 will are described below.

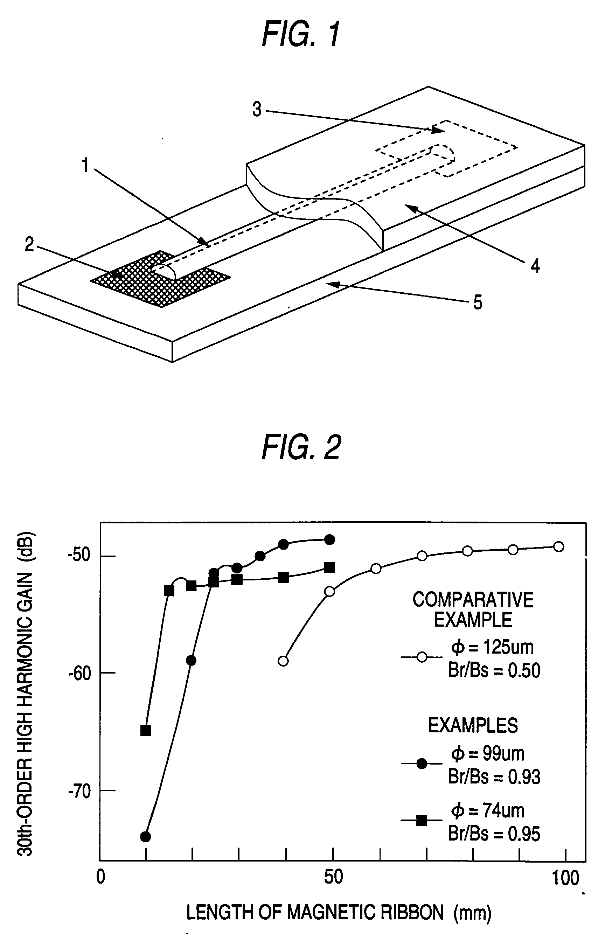

Fig. 1 is a typical schematic view of a magnetic marker. In this magnetic marker, a magnetic ribbon 1 which is a pulse-generating element, and two magnetic sheets 2 and 3 which are disposed so as to adhere closely to opposite end portions of the magnetic ribbon 1, are nipped by substrates 4 and 5 from above and below so as to fix the magnetic sheets 2 and 3. The magnetic ribbon 1 comprises an amorphous magnetic metal formed from an alloy containing 39 atom % Fe, 39 atom % Co, 7 atom % Si, and 15 atom % of B.

Further, the material and thickness of each of the substrates varies depending on the intended application of the marker. Generally, polyethylene terephthalate (PET) film adhesive sheets each having a thickness of about 30 μm and having an adhesive layer are used as the substrates 4 and 5. The adhesive layer (not shown) in the lower surface of the substrate 5 is used for attaching the marker to an article to be detected. The adhesive layer on the upper surface of the substrate 5 is used for fixing the magnetic ribbon 1 to the magnetic sheets 2 and 3 and further for adhering to the substrate 4. With respect to the arrangement of the magnetic ribbon 1 and the magnetic sheets 2 and 3, end portions of the magnetic ribbon 1 are located at isotopically equal distances (center portions) from the respective sides of the magnetic sheets 2 and 3. Further, for example, each of the magnetic sheets 2 and 3 as to the size thereof is shaped like a square having a side length of 10 mm and a thickness of 20 $\mu$m. Each of the magnetic sheets 2 and 3 as to the compositional proportion thereof is a magnetic material (Metglas 2705M) formed from a Co-group amorphous metal. Furthermore, with respect to the 10 cm-long magnetic sheets 2 and 3, the coercive force was measured in an exciting magnetic field of 1 Oe at a frequency of 50 Hz, and the coercive force of the magnetic sheets 2 and 3 thus measured was 0.03 Oe.

In Examples 1 to 15 and Comparative Examples 1 to 9 shown in Table 1 below, magnetic markers having the structure of Fig. 1 were formed using pulse-generating magnetic ribbons having a thickness to width ratio (thickness/width) in a range of from 0.1 to 0.2. The Examples differ with respect to equivalent wire diameter and the rectangular ratio $B_r/B_s$.

Fig. 2 is a graph showing the 30th-order high harmonic gain versus the length of the pulse-generating magnetic ribbon 1 in the magnetic marker shown in Fig. 1. In the magnetic marker of Example 3, an amorphous magnetic ribbon having an equivalent wire diameter of 99 $\mu$m, an rectangular ratio $B_r/B_s$ of 0.93 and a coercive force of 0.25 Oe was used as the magnetic ribbon 1. In the magnetic marker of Example 6, an amorphous magnetic ribbon having an equivalent wire diameter of 74 $\mu$m, an rectangular ratio $B_r/B_s$ of 0.95 and the coercive force of 0.23 Oe was used as the magnetic ribbon 1. On the other hand, in the magnetic marker of Comparative Example 1, an amorphous magnetic ribbon having an equivalent wire diameter of 125 $\mu$m, an rectangular ratio $B_r/B_s$ of 0.50 and a coercive force of 0.15 Oe was used as the magnetic ribbon 1. The data of Example 3, Example 6 and Comparative Example 1 are represented by black circles, black squares and white circles, respectively. Here, the rectangular ratio $B_r/B_s$ is a measured magnetic characteristic of the amorphous magnetic ribbon which is made sufficiently long to negative the influence of the demagnetising field. Namely, the magnetic ribbon having a diameter of 10 cm is used so that the saturation flux density Bs is obtained by measuring the saturation flux density in a condition where the magnetization is saturated by an excited magnetic field and the residual flux density Br is obtained by measuring an alternating BH loop in the excited magnetic field of 50Hz and a magnetic field amplitude of 1 Oe.

The magnetic marker is excited by an alternating magnetic field of 50 Hz and a magnetic field amplitude of 1 Oe. An induced voltage is obtained from a coil having a winding 590 turns over its 35 mm length. The induced voltage was component-analyzed and evaluated by a 3562A dynamic signal analyzer (made by Hewlett Packard Inc.).

A judgment as to whether or not an excellent large Barknausen signal is obtained from the magnetic marker, can be made by measuring the BH loop and the gain of the 30th-order high harmonic component of the excitation frequency. In a magnetic marker having a large Barknausen effect, the gain of the 30th-order high harmonic component desirably is not smaller than -53 dB with respect to a signal gain reference of 1 V. It is clearly seen from the measurement data shown below that Example 6 (black squares) provided an excellent harmonic gain even if the length of the magnetic ribbon 1 was shortened to 15 mm. On the contrary, in Comparative Example 1, excellent high harmonic gain was not obtained for the magnetic ribbon 1 having a length of up to 50 mm.

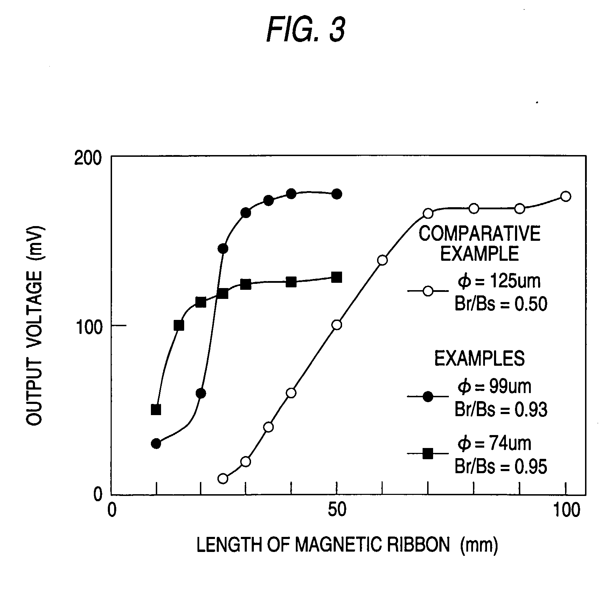

Fig. 3 shows the characteristic of output voltage as a function of the length of the magnetic ribbon 1 in the magnetic marker used in the measurement of Fig. 2. Here, the data of Example 3, Example 6 and Comparative Example 1 are represented by black circles, black squares and white circles, respectively. In the magnetic marker of Example 6 (black squares), a large Barkhausen signal with an output voltage of not less than 100 mV was obtained even when the length of the magnetic ribbon 1 was shortened to 15 mm. On the contrary, in Comparative Example 1, excellent output voltage was not obtained for the magnetic ribbon 1 having a length shorter than 50 mm.

Table 1 shows the output voltage and 30th-order high harmonic gain for each of the magnetic markers prepared in Examples 1 to 15 and Comparative Example 1 to 9 where the magnetic ribbons had an equivalent wire diameter and rectangular ratio $B_r/B_s$ as indicated below. In each example, the length the magnetic ribbon was 25 mm.

Additionally, the coercive force of the respective magnetic ribbons shown in Table 1 were in the range of from 0.10 to 0.30 Oe when the coercive force of 10 cm-long sections thereof was measured under an excitation magnetic field of 1 Oe at a frequency of 50 Hz.

TABLE 1

|  | Equivalent Wire Diameter | $B_r/B_s$ | Output Voltage | 30th-order High Harmonic Gain |
|---|---|---|---|---|
| Example 1 | 109 μm | 0.82 | 113 mV | -50.1 dB |
| 2 | 104 μm | 0.87 | 121 mV | -50.8 dB |
| 3 | 99 μm | 0.93 | 140 mV | -51.0 dB |
| 4 | 92 μm | 0.91 | 132 mV | -51.4 dB |
| 5 | 88 μm | 0.92 | 134 mV | -52.1 dB |
| 6 | 74 μm | 0.95 | 120 mV | -52.5 dB |
| 7 | 94 μm | 0.96 | 125 mV | -51.3 dB |
| 8 | 110 μm | 0.94 | 131 mV | -50.9 dB |
| 9 | 82 μm | 0.98 | 119 mV | -52.4 dB |
| 10 | 100 μm | 0.72 | 143 mV | -51.1 dB |
| 11 | 106 μm | 0.78 | 136 mV | -50.4 dB |
| 12 | 110 μm | 0.69 | 134 mV | -51.5 dB |
| 13 | 120 μm | 0.66 | 128 mV | -50.2 dB |
| 14 | 124 μm | 0.79 | 133 mV | -51.6 dB |
| 15 | 130 μm | 0.67 | 120 mV | -51.4 dB |
| Comparative Example 1 | 125 μm | 0.50 | 13 mV | -74.3 dB |
| 2 | 120 μm | 0.95 | 30 mV | -60.5 dB |
| 3 | 50 μm | 0.95 | 60 mV | -57.0 dB |
| 4 | 125 μm | 0.63 | 34 mV | -63.0 dB |
| 5 | 80 μm | 0.75 | 20 mV | -70.0 dB |
| 6 | 140 μm | 0.92 | 30 mV | -58.1 dB |
| 7 | 145 μm | 0.85 | 60 mV | -57.8 dB |
| 8 | 145 μm | 0.70 | 34 mV | -59.4 dB |
| 9 | 70 μm | 0.78 | 20 mV | -67.8 dB |

It is clearly seen from Table 1 that a large Barkhausen signal having sufficiently high output voltage and 30th-order high harmonic gain is obtained in Examples 1 to 15 of the invention when the equivalent wire diameter D is in a range of from 60 μm to 115 μm and the BH loop rectangular ratio $B_r/B_s$ is not less than 0.8, or when the equivalent wire diameter D is in a range of from 60 μm to 140 μm and the BH loop rectangular ratio $B_r/B_s$ satisfies the above expression (1) with respect to the equivalent wire diameter D (μm), or when the equivalent wire diameter D is in a range of from 70 μm to 140 μm and the BH loop rectangular ratio $B_r/B_s$ satisfies the above expression (2) with respect to the equivalent wire diameter D (μm).

On the contrary, when the magnetic ribbon which is outside the specific ranges of the present invention with respect to equivalent wire diameter and BH loop rectangular ratio $B_r/B_s$ as shown by Comparative Examples 1 to 9 in Table 1, the output voltage and the high order harmonic gain are reduced. This is because the value of the demagnetizing field increases so that a large Barkhausen reversal does not occur when the wire length is 25 mm or less, or the output voltage and the high order harmonic gain are reduced because the total quantity of reverse flux is too small even when such a large Barkhausen reversal occurs. Accordingly, an excellent large Barkhausen signal is not obtained.

The effect of the present invention is not diminished even when closely disposed magnetic sheets 2 and 3 having a large size (area) are selected in the magnetic marker of the present invention. However, the increase in size (area) of the closely disposed magnetic sheets 2 and 3 prevents the size of the magnetic marker from being reduced.

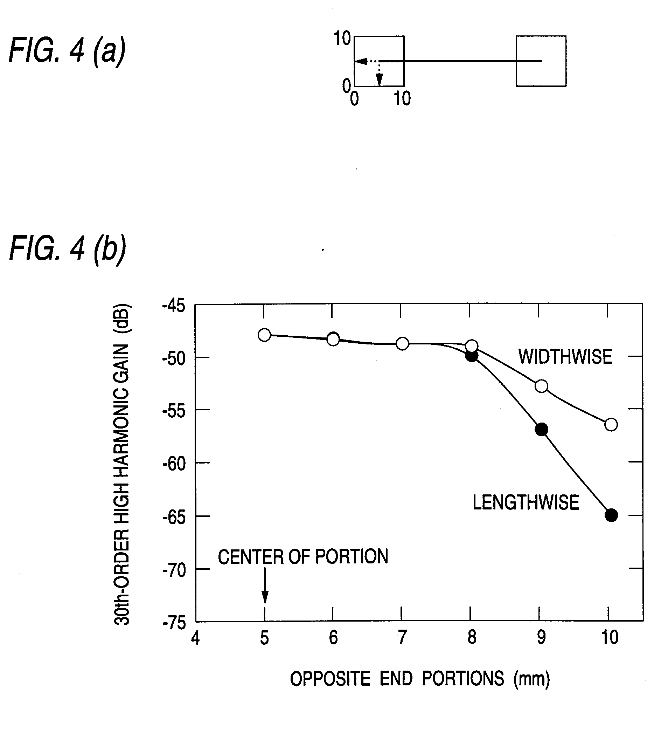

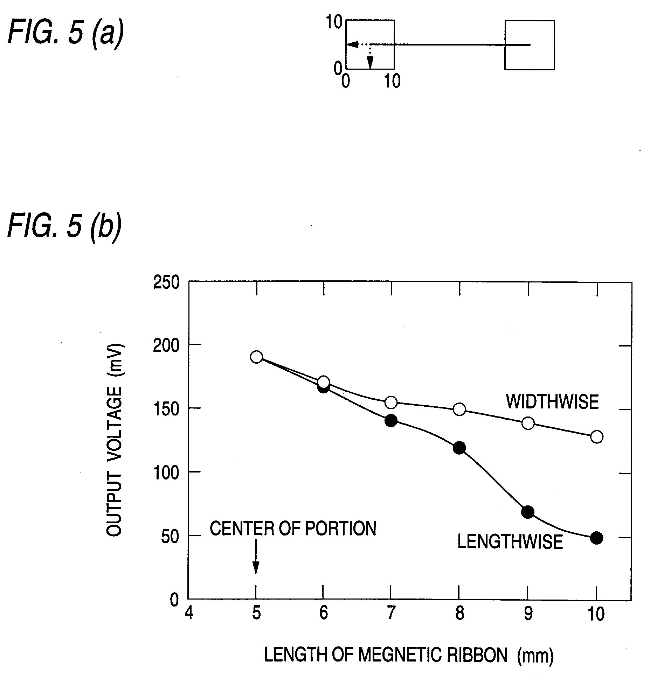

The relationship between the relative positions of the magnetic sheets 2 and 3 which are made to closely adhere to opposite end portions of the magnetic ribbon 1 in the magnetic marker according to the present invention is described below. Figs. 4(b) and 5(b) show the 30th high harmonic gain and output voltage of the magnetic marker as a function of a change in the existing positions of the opposite end portions of the magnetic ribbon 1 relative to the two magnetic sheets 2 and 3. The abscissa axis shows the lengthwise (black circles) and widthwise (white circles) positions of the magnetic ribbon as distances from each side as illustrated in Figs. 4(a) and 5(a). The positions which generate an excellent large Barkhausen signal are as follows. In the lengthwise direction in which the magnetic marker is formed, the opposite end portions of the magnetic ribbon 1 are preferably located in the lengthwise center portions of the magnetic sheets 2 and 3 within ±25 % of the whole length of each of the magnetic sheets 2 and 3. Also in the widthwise direction, the opposite end portions of the magnetic ribbon 1 are preferably located in the widthwise center portions of the magnetic sheets 2 and 3 within ±25 % of the whole length of each of the magnetic sheets 2 and 3.

Here, when each of the magnetic sheets 2 and 3 for reducing the demagnetizing field on the pulse-generating magnetic ribbon 1 has a shape other than a square (rectangle), the opposite end portions of the magnetic ribbon as to the effective positions thereof for reducing the demagnetizing field are preferably located within ±25 % of the distance from the lengthwise and widthwise center portions of the magnetic sheets 2 and 3.

In the magnetic marker according to the present invention, magnetic sheets having a shape other than a rectangle can be used as the magnetic substances which closely adhere to the opposite end portions of the magnetic ribbon 1. Examples 16 and 17 are described below.

Example 16

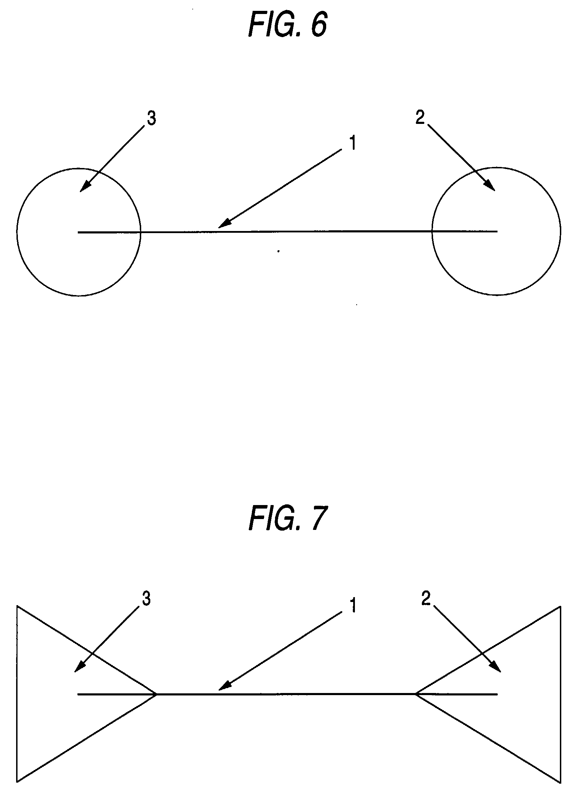

A magnetic marker having the structure shown in Fig. 1 was prepared, using a magnetic ribbon 1 having a length of 25 mm, an equivalent wire diameter of 99 $\mu$m, an rectangular ratio of 0.93 and a coercive force of 0.25 Oe. Two circular magnetic sheets 2 and 3 each having a coercive force of 0.03 Oe, a thickhess of 20 $\mu$m and a diameter of 10 mm were disposed on the opposite end portions of the magnetic ribbon 1 so as to be located in the center portions of the circular magnetic sheets 2 and 3 as shown in Fig. 6. Then, the output voltage and 30th order high harmonic gain of the magnetic marker were measured in the same manner as in Example 1. As a result, an excellent large Barkhausen signal having an output voltage of 125 mV and a 30th-order high harmonic gain of -52 dB was obtained.

Example 17

A magnetic marker having the structure shown in Fig. 1 was prepared, using a magnetic ribbon 1 having a length of 25 mm, an equivalent wire diameter of 99 $\mu$m, an rectangular ratio of 0.93 and a coercive force of 0.25 Oe. Two equilateral-triangle magnetic sheets 2 and 3 each having a coercive force of 0.03 Oe, a thickness of 20 $\mu$m and a side length of 10 mm were disposed on the opposite end portions of the magnetic ribbon 1 so as to be located in the center portions of the equilateral-triangle magnetic sheets 2 and 3 as shown in Fig. 7. Then, the output voltage and 30th high harmonic gain of the magnetic marker were measured in the same manner as in Example 1. As a result, an excellent large Barkhausen signal having an output voltage of 114 mV and a 30th-order high harmonic gain of -52.4 dB was obtained.

Examples 16 and 17 clearly show that magnetic sheets of various shapes can be used as the magnetic substances in the magnetic marker of the present invention.

It should further be apparent to those skilled in the art that various changes in form and detail of the invention as shown and described above may be made. It is intended that such changes be included within the spirit and scope of the claims appended hereto.

**Claims**

1. A magnetic marker capable of showing a large Barkhausen reversal, comprising a pulse-generating magnetic ribbon, and magnetic substances disposed at opposite ends of said magnetic ribbon having a coercive force smaller than the coercive force of said magnetic ribbon, wherein said pulse-generating magnetic ribbon has an equivalent wire diameter in a range of from 60 $\mu$m to 115 $\mu$m and a BH loop rectangular ratio $B_r/B_s$ that is not less than 0.8.

2. The magnetic marker as claimed in claim 1, wherein the magnetic ribbon comprises an amorphous alloy containing at least one Fe-group element in a range of from 65 to 90 atom % selected from the group consisting of Fe, Co and Ni; at least one element in a range of from 10 to 35 atom % selected from the group consisting of B, P, C, Si, Al, Ga, Zr, Nb and Ta; and at least one element in a range of 10 atom % or less selected from the group consisting of W, V, Cr, Cu and Mo.

3. The magnetic marker as claimed in claim 1, wherein the magnetic ribbon has an equivalent wire diameter in a range of from 65 $\mu$m to 112 $\mu$m.

4. The magnetic marker as claimed in claim 1, wherein the magnetic ribbon has an equivalent wire diameter D in a range of from 70 $\mu$m to 110 $\mu$m.

5. The magnetic marker as claimed in claim 1, wherein the magnetic ribbon has a length in a range of from 5 mm to 100 mm.

6. The magnetic marker as claimed in claim 1, wherein the magnetic ribbon has a length in a range of from 15 mm to 50 mm.

7. The magnetic marker as claimed in claim 1, wherein the magnetic substances are in the form of magnetic sheets having a thickness in a range of from 0.01 to 100 $\mu$m, an area in a range of from 1 to 10,000 $mm^2$.

8. The magnetic marker as claimed in claim 1, wherein the magnetic substances have a shape selected from a circle, an ellipse and a polygon.

9. The magnetic marker as claimed in claim 1, wherein the ends of the magnetic ribbon are located in the vicinity of the center portions of the respective magnetic substances.

10. The magnetic marker as claimed in claim 1, wherein the ends of the magnetic ribbon are located within ±25% of the distance from the lengthwise and widthwise center portions of the respective magnetic substances.

11. A magnetic marker capable of showing a large Barkhausen reversal, comprising a pulse-generating magnetic ribbon, and magnetic substances disposed at opposite ends of said magnetic ribbon having a coercive force smaller than the coercive force of said magnetic ribbon, wherein said pulse-generating magnetic ribbon has an equivalent wire diameter D in a range of from 60 $\mu$m to 140 $\mu$m and a BH loop rectangular ratio $B_r/B_s$ which satisfies the following expression (1):

$$-0.003D + 1.01 \leq B_r/B_s \leq -0.00125D + 1.0875 \tag{1}$$

with respect to the equivalent wire diameter D.

12. The magnetic marker as claimed in claim 11, wherein the magnetic ribbon comprises an amorphous alloy containing at least one Fe-group element in a range of from 65 to 90 atom % selected from the group consisting of Fe, Co and Ni; at least one element in a range of from 10 to 35 atom % selected from the group consisting of B, P, C, Si, Al, Ga, Zr, Nb and ta; and at least one element in a range of 10 atom % or less selected from the group consisting of W, V, Cr, Cu and Mo.

13. The magnetic marker as claimed in claim 11, wherein the magnetic ribbon has an equivalent wire diameter D in a range of from 70 $\mu$m to 130 $\mu$m.

14. The magnetic marker as claimed in claim 11, wherein the magnetic ribbon has a length in a range of from 5 mm to 100 mm.

15. The magnetic marker as claimed in claim 11, wherein the ends of the magnetic ribbon are located in the vicinity of the center portions of the respective magnetic substances.

16. The magnetic marker as claimed in claim 11, wherein the ends of the magnetic ribbon are located within ±25% of the distance from the lengthwise and widthwise center portions of the respective magnetic substances.

17. A magnetic marker capable of showing a large Barkhausen reversal, comprising a pulse-generating magnetic ribbon, and magnetic substances disposed at opposite ends of said magnetic ribbon having a coercive force smaller than the coercive force of said magnetic ribbon, wherein said pulse-generating magnetic ribbon has an equivalent wire diameter D in a range of from 70 $\mu$m to 140 $\mu$m and a BH loop rectangular ratio $B_r/B_s$ which satisfies the following expression (2):

$$-0.003D + 1.01 \leq B_r/B_s \leq 0.8 \tag{2}$$

with respect to the equivalent wire diameter D.

**18.** The magnetic marker as claimed in claim 17, wherein the magnetic ribbon has an equivalent wire diameter D in a range of from 90 μm to 130 μm.

**19.** The magnetic marker as claimed in claim 17, wherein the magnetic ribbon has a length in a range of from 5 mm to 100 mm.

**20.** The magnetic marker as claimed in claim 17, wherein the ends of the magnetic ribbon are located in the vicinity of the center portions of the respective magnetic substances.

**21.** The magnetic marker as claimed in claim 17, wherein the ends of the magnetic ribbon are located within ±25% of the distance from the lengthwise and widthwise center portions of the respective magnetic substances.

## FIG. 1

## FIG. 2

30th-ORDER HIGH HARMONIC GAIN (dB)

LENGTH OF MAGNETIC RIBBON (mm)

COMPARATIVE EXAMPLE

$\phi = 125$um
Br/Bs = 0.50

EXAMPLES

$\phi = 99$um
Br/Bs = 0.93

$\phi = 74$um
Br/Bs = 0.95

## FIG. 3

*FIG. 4 (a)*

*FIG. 4 (b)*

30th-ORDER HIGH HARMONIC GAIN (dB)

WIDTHWISE

LENGTHWISE

CENTER OF PORTION

OPPOSITE END PORTIONS (mm)

FIG. 5 (a)

FIG. 5 (b)

OUTPUT VOLTAGE (mV)

250

200

150

100

50

0

WIDTHWISE

CENTER OF PORTION

LENGTHWISE

4  5  6  7  8  9  10

LENGTH OF MEGNETIC RIBBON (mm)

## FIG. 6

## FIG. 7